Europäisches Patentamt

European Patent Office

Office européen des brevets

(11) Veröffentlichungsnummer: **0 345 654**
**A2**

## (12) EUROPÄISCHE PATENTANMELDUNG

(21) Anmeldenummer: 89109991.3

(22) Anmeldetag: 02.06.89

(51) Int. Cl.⁴: **C01F 7/46** , **C01F 7/14**

(30) Priorität: 03.06.88 US 202982

(43) Veröffentlichungstag der Anmeldung:
**13.12.89 Patentblatt 89/50**

(84) Benannte Vertragsstaaten:
**AT BE CH DE ES FR GB GR IT LI LU NL SE**

(71) Anmelder: **VEREINIGTE ALUMINIUM-WERKE AKTIENGESELLSCHAFT**
**Georg-von-Boeselager-Strasse 25**
**D-5300 Bonn 1(DE)**

(72) Erfinder: **Brown, Neil, Dr.**
**Friedrichstrasse 43**
**D-5300 Bonn 1(DE)**

(74) Vertreter: **Müller-Wolff, Thomas, Dipl.-Ing.**
**c/o Vereinigte Aluminium-Werke AG**
**Patentabteilung Postfach 2468**
**D-5300 Bonn 1(DE)**

(54) Verfahren zur Entfernung von Natriumoxalat aus alkalischen Aluminatlaugen.

(57) Die Erfindung betrifft ein Verfahren zur Entfernung des Natriumoxalats aus einer alkalischen Aluminatlauge des Bayer-Prozesses.

Zuerst erfolgt die Wäsche des gesamten Aluminiumhydroxid-Produktes aus der Ausrührung, um alles kristalline Natriumoxalat zu entfernen, wodurch eine weitere Ausfällung von Natriumoxalat in den Aluminiumhydroxid-Ausrührern verhindert wird. Dadurch steigt die Konzentration des gelösten Natriumoxalats auf eine Höhe, welche zur ökonomischen Entfernung von Natriumoxalat durch Kristallisation aus einem Nebenstrom führt. Ein teurer Eindampfungsschritt ist deshalb nicht mehr erforderlich. Das Natriumoxalat wird in einer Menge entfernt, die dem während des Bauxitaufschlusses neu gebildeten Natriumoxalat entspricht. Auf diese Weise wird eine konstante Konzentration des gelösten Natriumoxalats in der Aluminiumhydroxid-Ausrührung aufrechterhalten. Zusätzlich kann die Aluminiumhydroxid-Ausrührung (im Zustand ohne kristallines Natriumoxalat) durch Zugabe kleiner Mengen eines organischen Polymeren stabilisiert werden.

EP 0 345 654 A2

## Verfahren zur Entfernung von Natriumoxalat aus alkalischen Aluminatlaugen

Die vorliegende Erfindung betrifft ein Verfahren zur Natriumoxalatentfernung aus alkalischen Aluminatlaugen des Bayer-Prozesses zur Gewinnung von Aluminiumoxid aus Bauxit.

Im Bayer-Prozeß wird Bauxit mit rückgeführter alkalischer Aluminatlauge bei erhöhter Temperatur und erhöhtem Druck behandelt, um Aluminiumoxid aus dem Bauxit zu lösen. Die so entstandene Suspension enthält das gelöste Aluminiumoxid und den nicht gelösten Rotschlamm (d.h. Eisenoxid, Silikate, Titandioxid usw.). Der Rotschlamm wird abgetrennt, wobei man eine alkalische Aluminatlauge ohne Feststoff erhält, die als "Klarlauge" bezeichnet wird. Danach wird die Klarlauge mit Aluminiumhydroxid geimpft und etwa die Hälfte des Aluminiumoxidgehaltes ausgefällt. Das ausgefällte Aluminiumhydroxid wird von der alkalischen Aluminatlauge abgetrennt. Ein Teil des ausgefällten Aluminiumhydroxids wird als Impfer zur Ausfällung ("Ausrührung") des Aluminiumhydroxids rückgeführt, während der Rest als Aluminiumhydroxid-Endprodukt ausgeschleust wird. Die verbleibende alkalische Aluminatlauge ("Dünnlauge") wird entweder in den Prozeß direkt zurückgeführt oder zum Teil durch Eindampfung konzentriert, bevor sie für die Bauxitauflösung verwendet wird.

Der im Bayer-Prozeß eingesetzte Bauxit enthält organische Substanzen, welche sich ganz oder teilweise während des Bauxitaufschlusses in der Lauge lösen. Die organische Substanzen werden zu Verbindungen mit niedrigeren Molgewichten durch die Einwirkungen von hochkonzentriertem Alkali und den erhöhten Temperaturen während des Bauxitaufschlusses abgebaut. Infolgedessen kann die Bayer-Lauge verschiedene organische Kohlenstoffverbindungen enthalten: Huminsäuren mit hohen Molgewichten bis zu Abbau-Endprodukten wie Natriumoxalat.

Natriumoxalat stellt eine besonders problematische organische Substanz dar, die sich als einzige unter den vielen Abbauprodukten bis zu einer Konzentration anreichert, die über der Gleichgewichtslöslichkeit in der Lauge liegt. Die alkalische Aluminatlaugen sind daher bezüglich des Natriumoxalats übersättigt, und in diesem Zustand werden sie teilweise durch die Anwesenheit der anderen gelösten organischen Substanzen stabilisiert.

Das Natriumoxalat ist somit eine der Hauptverunreinigungen in der alkalischen Aluminatlauge des Bayer-Prozesses. Solange es gelöst in der Lauge verbleibt, wird Natriumoxalat für relativ harmlos gehalten. Schwierigkeiten entstehen jedoch, wenn das gelöste Natriumoxalat bei Temperaturen und Alkalikonzentrationen auskristallisiert, die sich während des Ausrührens des Produktions-Aluminiumhydroxids einstellen. Das sich bildende kristalline Natriumoxalat behindert die Partikelagglomeration und fördert die Bildung von feinkörnigen neuen Aluminiumhydroxidkristallen. Deshalb übt die Anwesenheit von Natriumoxalat einen schädlichen Einfluß auf die Partikelgröße des Produktions-Aluminiumhydroxids aus. Darüberhinaus kann die Anwesenheit von Natriumoxalat Schwierigkeiten bei der Filtration der Aluminiumhydroxidsuspensionen verursachen.

In modernen Aluminiumoxidfabriken besteht daher die Ausrührung des Aluminiumhydroxids aus zwei Teilen. Im ersten werden die feineren Aluminiumhydroxid-Partikeln einer relativ schnellen Agglomeration unterworfen, während im anderen die Agglomerate konsolidiert werden. Partikel, welche dem Agglomerationsprozeß ausgesetzt sind, werden vor der Ausrührung von Natriumoxalat freigewaschen, während das Aluminiumhydroxid, das in die Wachstumsausrührer geleitet wird, (d.h. agglomerierte Partikel und zurückgeführtes grobes Material) keiner Waschmaßnahme unterworfen wird.

Das Wasser zum Waschen des Aluminiumhydroxid-Impfers und die Produktpartikel können bedeutende Mengen des aufgelösten Natriumoxalats enthalten. Typischerweise enthält das ungewaschene Aluminiumhydroxid 0,1-1,0 % Natriumoxalat, bezogen auf die Gesamtmenge des Aluminiumhydroxids. Durch Eindampfung des Waschwassers ist es dann möglich, das Natriumoxalat auszukristallisieren, welches dann abgetrennt und entsorgt wird. Die Auswaschung des Impfers ist somit ein bekanntes anerkanntes Verfahren der Oxalatentfernung aus dem Bayer-Prozeß (vgl. beispielsweise Roberts et al., US-Patent Nr. 3,372,985). Andererseits kann die Natriumoxalat-Entfernung durch den "Impferwaschprozeß" nur dann funktionieren, wenn in der Aluminiumhydroxid-Ausrührung bereits kristallines Natriumoxalat vorliegt. Daher muß die Aluminiumhydroxid-Ausrührung erst durch kristallines Oxalat "behindert sein", bevor die "Impferauswaschung" funktionieren kann.

Andere Verfahren zur Entfernung von Natriumoxalat aus den alkalischen Aluminatlaugen des Bayer-Prozesses nutzen die Abhängigkeit der Natriumoxalatlöslichkeit von Temperatur und Konzentration der Laugen (vgl. beispielsweise SATO et al., US-Patent Nr. 3,649,185 und Fujiike et al., Franz. Patent Nr. 2,405,901). Um den Natriumoxalatgehalt sowohl auf einer vertretbaren Höhe während des laufenden Verfahrens zu halten als auch festes Natriumoxalat abzuscheiden, ist die Kristallisation des Natriumoxalats aus einem Nebenstrom durch Impfen der Dünnlauge, die durch Eindampfung teilweise aufkonzentriert wurde im Gegensatz zu der Eindampfung des Waschwassers (vgl. beispielsweise Carruthers et al. US 4,038,039 und Yamada et al US 4,263.261) durchzuführen.

Die fortschreitende Kontaminierung und Desaktivierung der Impfkristalle des Natriumoxalats durch die anderen in der Lauge anwesenden organischen Verbindungen wurde überwunden durch geeignete Waschverfahren, mit denen die Aktivität der Impfkristalle wiederhergestellt und eine für die Filtration und Abtrennung des kristallinen Natriumoxalats geeignete Kristallform erhalten wird (vgl. beispielsweise Yamada et al., Light Metals Conf. Proceedings 1973, S. 745-754).

Die Kristallisation des Natriumoxalats aus einem durch Teileindampfung konzentrierten Nebenstrom ist eine Alternative zum "Impferwaschprozess" bei der Natriumoxalatentfernung. Da jedoch nicht alle Aluminiumoxidfabriken mit mehrstufigen Laugeneindampfstationen ausgerüstet sind wie beispielsweise solche Fabriken, die das Rohraufschlußverfahren benutzen, benötigt man eine Methode zur Natriumoxalatentfernung, die wenigstens ein Äquivalent zur Impfkristallisation der teilweise eingedampften Lauge bietet, ohne aber die Vorkonzentrierung durch Laugeneindampfung zu benötigen.

Aufgabe der vorliegenden Erfindung ist es, das Verfahren zur Natriumoxalatentfernung aus den alkalischen Aluminatlaugen des Bayer-Prozesses so weiterzuentwickeln, daß eine Teileindampfung der Lauge vor der Natriumoxalat-Kristallisation nicht benötigt, die Verunreinigung der Aluminiumhydroxid-Ausrührung durch das Natriumoxalat vermieden sowie die Aluminiumhydroxid-Ausrührung bezüglich der erhöhten Konzentration des gelösten Natriumoxalats durch die Zugabe von kleinen Mengen eines geeigneten organischen Polymeren stabilisiert wird.

Die Aufgabe wird erfindungsgemäß durch die in den Patentansprüchen angegebenen Merkmale gelöst. Das Verfahren zur Natriumoxalatentfernung aus der alkalischen Aluminatlauge des Bayer-Prozesses umfaßt folgende Schritte:
- Praktisch wird die gesamte Menge des Produktions-Aluminiumhydroxids aus der Ausrührung gewaschen, bis es frei von kristallinem Natriumoxalat ist.
- Einstellung einer erhöhten Konzentration des gelösten Natriumoxalats im Hauptstrom der Prozeßlauge, bis eine ökonomische Abtrennung der erforderlichen Natriumoxalatmenge möglich wird, wobei die Aluminiumhydroxid-Ausrührung vom Natriumoxalat freigehalten wird. Falls notwendig: Erhöhung der Stabilität der Aluminiumhydroxid-Ausrührung mit Rücksicht auf die erhöhte Konzentration des gelösten Natrium-xalats durch Zugabe kleiner Mengen eines geeigneten organischen Polymers.

Mit anderen Worten: durch die vorliegende Erfindung wird das Auswaschen der Gesamtmenge des Aluminiumhydroxids frei von Natriumoxalat ermöglicht. Die Konzentration des gelösten Natriumoxalats in dem Hauptprozeßstrom steigt bis zu der Höhe, die es erlaubt, ökonomisch genug Natriumoxalat durch die Kristallisation aus dem Nebenstrom zu entfernen, um einen stetigen Betrieb der Aluminiumhydroxid-Ausrührung frei von kristallinem Natriumoxalat zu gewährleisten.

Darüberhinaus wurde gefunden, daß die Stabilität der Aluminiumhydroxid-Ausrührung hinsichtlich der höheren Konzentration des gelösten Natriumoxalats erhöht werden kann durch die Zugabe kleiner Mengen eines geeigneten organischen Polymers. Im folgenden wird eine kurze Beschreibung des Verfahrensschemas gegeben.

Die Fig. 1 stellt das erfindungsgemäße Verfahren zur Natriumoxalat-Entfernung aus der alkalischen Aluminatlauge des Bayer-Prozesses im einzelnen dar. Anhand der Fig. 1 wird ein Verfahren zur Natriumoxalat-Entfernung aus einer alkalischen Natriumaluminatlauge durch Kristallisation aus einem Nebenstrom beschrieben, wobei die Notwendigkeit der teilweisen Eindampfung der Lauge vor der Natriumoxalat Kristallisation entfällt.

Typisch für die Natriumoxalat-Verteilung in der Aluminiumhydroxid- Ausrührung einer Aluminiumoxidfabrik, welche die Impferwäsche als das hauptsächliche Mittel zur Natriumoxalat-Entfernung enthält, sind folgende Werte:

| | |
|---|---|
| gelöstes Natriumoxalat | 2,6-3,0 g/l |
| kristallines Natriumoxalat | 0,5-1,0 %, |

berechnet unter Bezug auf einen Aluminiumhydroxid-Gehalt von 300-350 g/l.

Bei einer Alkalikonzentration von etwa 130 g/l $Na_2O$ ergibt die Anwesenheit von 0,5 bis 1,0 % einen stabilen Austrag von etwa 0,2 g/l aus dem Hauptlaugenstrom mittels Impfkristallisation. Im Beharrungszustand entsprechen dieselben 0,2 g/l etwa dem Natriumoxalat-Eintrag in den Prozeß aus den organischen Kohlenstoffsubstanzen, welche den Prozeß mit dem Ausgangsbauxit erreichen.

Dabei wurde gefunden - wenn praktisch das gesamte Aluminiumhydroxid frei von Natriumoxalat ausgewaschen wird -, daß die Konzentration des gelösten Natriumoxalat sich auf 4,0 g/l erhöhen wird und auf dieser Höhe verbleiben kann, ohne daß unter den Bedingungen der Aluminiumhydroxid-Ausrührung eine Natriumoxalatkristallisation stattfindet.

Unter Verwendung der bekannten Beziehungen für die Natriumoxalat-Löslichkeit in der alkalischen Aluminatlauge des Bayer-Prozesses, kann man berechnen, daß bei einer Lösungskonzentration von 130 g/l und einer Temperatur von 60 °C sich die Übersättigung (d.h. die Treibkraft der Kristallisation) bezogen auf das Natriumoxalat, um einen Faktor von etwa 100 % erhöht (d.h. von etwa 75 % auf etwa 150 % Übersättigung).

$$C_{Oxalatübersättigung} = C_{Oxalatkonz.\ in\ Lauge} - C_{Oxalat\ Gleichgewichts-\ löslichkeit}$$

$$C_{Oxalat-\ Gleichgewichts-\ löslichkeit} = 7,62 \quad exp\ [0,012\ T - 0,016\ FS - 0,011\ CO_3^{2-}]$$

worin T die Laugentemperatur in °C und $CO_3^{2-}$ die freie Konzentration des Karbonats, ausgedrückt als g/l $Na_2O$, ist (vgl. Brown et al., Light Metals Conf. Proceedings 1980, S. 107).

Nach dem bekannten Verfahren würde die Dünnlauge aus dem Bayer-Prozeß eine Konzentrierung durch Teileindampfung von 130 auf 156 g/l $Na_2O_{frei}$ erfordern, d.h. eine 20 %-ige Erhöhung der Laugenkonzentration, um dieselbe Erhöhung der Übersättigung -bezogen auf Natriumoxalat - zu erreichen.

Wenn die alkalische Aluminatlauge mit 4,0 g/l Natriumoxalat in einem Nebenstrom bei 60 °C mit 50 g/l Impferkristallen des vorher auskristallisierten Natriumoxalats versetzt wird kann die Konzentration des gelösten Natriumoxalats auf <2,0 g/l gesenkt werden.

Eine kontinuierliche Behandlung eines Zehntels des Betriebslaugenstromes (entzogen als Dünnlauge nach der Aluminiumhydroxid-Ausrührung) reicht praktisch aus, um den "Eintrag" des Natriumoxalats in den Prozeß zu kompensieren.

Daraus läßt sich erkennen, daß der Betrieb bei erhöhten Konzentrationen des gelösten Natriumoxalats bei vollkommener Abwesenheit des kristallinen Natriumoxalats unter wesentlich anderen Bedingungen abläuft, als wenn das kristalline Natriumoxalat in der Ausrührung anwesend ist.

Der problematische Natriumoxalat-Austrag bedingt durch die Anwesenheit der Impfkristalle ist nicht mehr gegeben. Daher ist es wichtig, festzustellen, wie hoch die zulässige Natriumoxalat-Konzentration in der Betriebslauge ist, ohne daß es zu einer plötzlichen Bildung neuer Natriumoxalat-Kristalle kommt.

Entsprechende Versuche, welche im Laboratorium durchgeführt wurden, zeigen, daß die Konzentration des gelösten Natriumoxalats bis auf 4,5 g/l (d.h. annähernd 200 % Übersättigung)) erhöht werden kann, bis die stimmulierte Keimbildung des Natriumoxalats, verursacht durch die Anwesenheit von Aluminiumhydroxid-Partikeln, eintritt.

Weitere Laboratoriumsversuche zeigten, daß die Zugabe von kleinen Mengen eines Natriumpolyacrylates (z.B. das Nalco-Erzeugnis M 8081) die durch festes Aluminiumoxid stimmulierte Natriumoxalat-Keimbildung behindert. Die Methode gemäß der vorliegenden Erfindung ist in einem schematischen Diagramm des Bayer-Hauptprozesses mit dem Natriumoxalat-Entfernungssystem gemäß der vorliegenden Erfindung dargestellt. Der Bauxit wird zuerst in einem Aufschlußapparat mit der Dünnlauge angerührt. Im Aufschlußverlauf gehen das Aluminiumoxid und auch die organischen Verbindungen in Lösung. Die entstandene Suspension wird dann filtriert, wodurch die unlöslichen Verunreinigungen, als Rotschlamm bekannt, abgetrennt werden, wobei eine klare alkalische Aluminatlösung (Klarlauge) entsteht.

Die Klarlauge wird abgekühlt; und zu ihr wird der Impfer zugegeben, um das Aluminiumhydroxid zu fällen, wobei Agglomerate entstehen, welche wachsen und sich verfestigen bis zur gewünschten Produktgröße, wonach sie abfiltriert werden und die verbleibende Dünnlauge in den Aufschlußapparat zurückgeführt wird. Das Produktions-Aluminiumhydroxid wird dann abgetrennt und mit Wasser gewaschen, vorzugsweise in einem Trommelfilter, wobei ein Teil in die Klarlauge eingeführt wird, wodurch der Ausrührzyklus abgeschlossen wird.

In den Prozeß wird ein Schritt eingeführt, in dem Natriumoxalat entfernt wird, wobei etwa 1/10 des umlaufenden Hauptstromes der verbrauchten alkalischen Lauge, der Dünnlauge, in eine Nebenstrom-Kristallisation eingeführt wird. Diese Dünnlauge hat eine erhöhte Natriumoxalat-Konzentration, weil in sie alles kristalline Natriumoxalat aus dem gesamten Aluminiumhydroxid der Ausrührung ausgewaschen wurde. Dadurch wird die Kristallisation von Natriumoxalat in der Aluminiumhydroxid-Ausrührung verhindert. Die Dünnlauge mit einer erhöhten Natriumoxalat-Konzentration wird mit Impfkristallen des Natriumoxalats in einer Menge von mindestens 2 g/l Natriumoxalat bei einer Temperatur von etwa 60 °C in Berührung gebracht.

Die Verweilzeit im Kristallisator hängt von der Temperatur und der verwendeten Menge der Impfkristalle ab. Sie liegt optimal innerhalb des Bereichs von 30 bis 120 Minuten.

In dem Fließbild wird eine kontinuierliche Betriebsweise dargestellt, welche als bevorzugt angesehen wird. Die vorliegende Erfindung kann aber auch in diskontinuierlicher oder halbkontinuierlicher Weise durchgeführt werden. Es folgen weitere Beispiele, die die Grundlage der Erfindung beschreiben, ohne ihren Umfang einzugrenzen.

Beispiel 1

Dünnlauge aus dem Bayer-Prozeß mit einer Zusammensetzung von 134 g/l $Na_2O_{frei}$, etwa 90 g/l $Al_2O_3$, einer geringfügig erhöhten Natriumoxalat-Konzentration von etwa 3,2 g/l wurde in aliquoten Mengen von 800 ml in eine Reihe von drei 1 Liter-Polyethylenflaschen abgefüllt.

In jede Flasche wurden 300 g/l festes Aluminiumhydroxid mit unterschiedlichen Mengen kristallinen Natriumoxalats zugegeben. Die Flaschen wurden dann geschlossen und die Suspensionen in einem Bad mit konstanter Temperatur von 60 °C 44 Stunden lang Kopf über Fuß rotiert. Am Versuchsende wurde der Feststoff analysiert. Folgende Ergebnisse wurden ermittelt:

| Beginn | Ende |
|---|---|
| % kristallines Natriumoxalat in Al(OH)$_3$ | % kristallines Natriumoxalat in Al(OH)$_3$ |
| 0,50 | 0,68 |
| 0,25 | 0,30 |
| <0,01 | <0,01 |

Die Ergebnisse zeigen, daß die Anwesenheit des kristallinen Natriumoxalats in dem Ausgangs-Aluminiumhydroxid durch den Impfeffekt die Kristallisation von weiterem Natriumoxalat begünstigt.

Sind zu Beginn keine meßbaren Natriumoxalatmengen vorhanden, findet keine Bildung von neuem kristallinem Natriumoxalat statt, auch wenn die Suspension längere Zeitspannen unter den Bedingungen der Aluminiumhydroxid-Ausrührung gehalten wird.

Beispiel 2

Dünnlauge gleicher Zusammensetzung wie im Beispiel 1 wurde auf Konzentrationen des gelösten Natriumoxalats von 4,0 g/l beziehungsweise 4,6 g/l eingestellt. Die Laugen wurden dann längere Zeitspannen auf 60 °C gehalten in Anwesenheit von 200 g/l wassergewaschenen Aluminiumhydroxids aus dem Bayer-Prozeß. Das Experiment wurde im Labor in derselben Weise durchgeführt wie im Beispiel 1 beschrieben.

Folgende Ergebnisse wurden erhalten:

| Ausgangskonzentration | Verweilzeit, h | Konzentration, gelöstes Na-Oxalat, g/l | Kristallines Natriumoxalat in Al(OH)$_3$ % |
|---|---|---|---|
| 4,0 | 20 | 4,0 | <0,01 |
|  | 36 | 3,9 | <0,01 |
|  | 46 | 4,1 | <0,01 |
| 4,6 | 16 | 4,6 | <0,01 |
|  | 24 | 4,4 | <0,01 |
|  | 36 | 4,5 | <0,01 |

Die Ergebnisse zeigen, daß bei Abwesenheit von kristallinem Natriumoxalat im Al(OH)$_3$-Impfer Dünnlauge mit einer Natriumoxalat-Konzentration bis zu etwa 4,6 g/l bezogen auf das Natriumoxalat unter den Bedingungen des Al(OH)$_3$-Ausrührers stabil ist.

Beispiel 3

Dünnlauge mit annähernd gleicher Zusammensetzung wie im Beispiel 2 wurde auf einen Natriumoxalatgehalt von 4,1 g/l eingestellt und dann mit 50 g/l kristallinem Natriumoxalat (abgeschieden im Bayer-Prozeß) versetzt, welches zuerst von anderen organischen Verunreinigungen ausgewaschen wurde, indem man die Natriumoxalat-Kristalle kurz - im Einklang mit der bekannten Verfahrensweise - mit einer verdünnten Alkalilösung, die untersättigt war bezüglich des Natriumoxalats, behandelte. In dieser Weise wurden 2-3 Gew.-% der Impferkristalle während des Waschvorgangs entfernt.

Die Natriumoxalat-Kristallisation wurde auf Impferkristallen in zyklischen Experimenten bei 60 °C in 60 min. mit periodischem Waschen der Natriumoxalat-Kristalle entsprechend der vorher beschriebene Arbeitsweise durchgeführt. Am Zyklusende wurden die Konzentration des gelösten Natriumoxalats und die Filtrationszeit der Suspension (Filtration bei konstanter Temperatur von 60 °C mit Filterpapier Selecta von Schleicher & Schüll, Nr. 595, Durchmesser 125 mm) bestimmt.

Folgende Ergebnisse wurden ermittelt:

| Zyklus No. | Natriumoxalatkonzentration g/l | Filtrationszeit Min. |
|---|---|---|
| 1 | 2,1 | 16 |
| 2 | 2,4 | 22 |
| 3 | 2,3 | 34 |
| Oxalat "gewaschen" | - | 12 |
| 4 | 2,2 | 23 |
| 5 | 2,3 | 50 |
| Oxalat "gewaschen" | - | 15 |
| 6 | 1,9 | 37 |

Die Filtrationszeit für das "gewaschene" Ausgangs-Natriumoxalat betrug 13 Minuten.

Die Ergebnisse zeigen, daß die Zugabe von 50 g/l Natriumoxalat-Impfer kaum ausreichte, um die benötigte Senkung der Konzentration von gelöstem Natriumoxalat um 2 g/l zu erzielen. Größere Zugaben des Impfers oder längere Verweilzeit würden die Konzentration von gelöstem Natriumoxalat bis in den Bereich 1,5 bis 2,0 g/l senken. Der erwartete Vergiftungseffekt der adsorbierten organischen Substanzen beeinträchtigte nicht ernsthaft die Oxalatkristallisation, vielmehr war die Beeinflussung der gemessenen Filtrationszeit nach der Kristallisation höher, so daß die Filtrationszeit positiver beeinflußt durch die verwendete "Wasch"-Prozedur wurde.

Die Verästelung von Oxalatkristallen, bedingt durch die adsorbierten organischen Substanzen, dürfte die schlechtere Filtration verursachen. Derartige Strukturen brechen jedoch unter dem Einfluß der "Wasch"-Prozedur zusammen.

Beispiel 4

Dünnlauge (Zusammensetzung: $Na_2O_{frei}$~135 g/l; $Al_2O_3$~ 92 g/l) wurde bei 70 °C auf eine Natriumoxalatkonzentration von 4,8 g/l eingestellt. 500 ml dieser Lauge wurden in jede der 3 Polypropylenflaschen gefüllt. In zwei Gefäße wurden 100 g gewaschenes $Al(OH)_3$ und in eines zusätzlich 30 mg/l (ausgedrückt als organischer Kohlenstoff) Natriumpolyacrylat NALCO M8081 mit einem Molgewicht von etwa $4.10^6$ abgefüllt.

Zu Versuchsbeginn wurden die drei Flaschen geschlossen und in einem Bad mit konstanter Temperatur von 70 °C untergebracht. Dann wurden sie Kopf-über-Fuß bei 8 UpM rotiert und die Temperatur im Verlauf von 41 Stunden auf 39 °C abgesenkt. Probenentnahmen erfolgten, um den Natriumoxalat-Gehalt als Funktion der Zeit zu analysieren. Ergebnisse waren wie folgt:

| Zeit Stunde | Temperatur °C | Natriumoxalatkonzentration | | |
|---|---|---|---|---|
| | | Lauge | Lauge· + Al(OH)$_3$ | Lauge + + Al(OH)$_3$ + Na-Polyacrylat |
| 0 | 70 | 4,8 | 4,8 | 4,8 |
| 4 | 65 | 4,7 | 4,7 | 4,8 |
| 15 | 60 | 3,7 | 3,7 | 4,5 |
| 26 | 50 | 3,9 | 3,9 | 4,6 |
| 39 | 41 | 2,5 | 2,5 | 2,6 |

Die Anwesenheit von $Al(OH)_3$ stimmuliert die Bildung von neuen Natriumoxalat-Kristallen bei einer Temperatur von 60 bis 65 °C. Bei Verwendung von Natriumpolyacrylat wird der Beginn der Bildung neuer Kristalle hinausgezögert, bis die Temperatur unter 50 °C gefallen ist, d.h. bis die Übersättigung - bezogen auf gelöstes Natriumoxalat - mehr als 200 % beträgt.

Beispiel 5

Dünnlauge (Zusammensetzung: 131 g/l $Na_2O_{frei}$; 86 g/l $Al_2O_3$) wurde bei 60 °C auf eine Natriumoxalatkonzentration von 4,5 g/l eingestellt. 500 ml der Lauge wurden zusammen mit 100 g gewaschenem $Al(OH)_3$ in jede von zwei Polypropylenflaschen abgefüllt. Zu einer dieser Flaschen wurden noch 30 mg/l (als organischer Kohlenstoff) Natriumpolyacrylat zugegeben. Der Versuch wurde bei einer konstanten Temperatur von 60 °C mit Probenahmen für Natriumoxalatbestimmung in Abhängigkeit von der Zeit vorgenommen.

Die Ergebnisse waren wie folgt:

| Zeit Stunden | Temperatur °C | Natriumoxalatkonzentration, g/l | |
|---|---|---|---|
| | | Lauge + + Al(OH)$_3$ nicht gewaschen | Lauge + + Al(OH)$_3$ nicht gewaschen + Na-Polyacrylat |
| 0 | 60 | 4,5 | 4,5 |
| 4 | 60 | 4,4 | 4,2 |
| 14 | 60 | 4,2 | 4,1 |
| 20 | 60 | 4,1 | 3,8 |

Die Ergebnisse zeigen, daß die Zugabe von 30 mg/l Natriumpolyacrylat für die Zurückhaltung des gelösten Natriumoxalats in der Lauge unwirksam ist. Wahrscheinlich wird durch die Adsorption des Polymeren an der relativ großen Menge von $Al(OH)_3$ seine Wirkungskraft auf das kristalline Natriumoxalat "verdünnt".

Zugabe von großen Polymermengen, um eine Konzentrationshöhe zu erreichen, bei der die Natriumoxalatkristallisation behindert wird, läßt sich nicht durchführen wegen der damit verbundenen Viskositätserhöhung der Lauge, welche die Geschwindigkeit der nachfolgenden Filtration der Aluminiumhydroxid-Suspension herabsetzt.

Beispiel 7

Die Versuche der Beispiele 5 und 6 wurden unter den gleichen Bedingungen wiederholt, bis auf die Reihenfolge der Feststoffzugabe in die Flaschen vor Versuchsbeginn. In einem Falle wurden 200 g/l gewaschenes Al(OH)$_3$ und 1 g/l kristallines Natriumoxalat in der Dünnlauge suspendiert und dann 30 mg/l Natriumpolyacrylat zugegeben.

Im anderen Falle wurde 1 g/l kristallines Natriumoxalat in Dünnlauge suspendiert, zu der Suspension 30 mg/l Natriumpolyacrylat zugegeben, danach 200 g/l gewaschenes Al(OH)$_3$. Die danach bei 60 °C und Verweilzeiten von bis zu 20 Stunden erhaltenen Ergebnisse waren wie folgt:

| Zeit Stunden | Temperatur °C | Natriumoxalatkonzentration, g/l | |
|---|---|---|---|
| | | Lauge + gewasch. Al(OH)$_3$ + Na-Oxalat + Na-Polyacrylat | Lauge + Natriumoxalat + Na-Polyacrylat + gewasch. Al(OH)$_3$ |
| 0 | 60 | 4,5 | 4,5 |
| 4 | 60 | 4,3 | 4,6 |
| 14 | 60 | 4,1 | 4,4 |
| 20 | 60 | 3,8 | 4,4 |

Die Ergebnisse bestätigen, daß Natriumpolyacrylat die Natriumoxalat-Kristallisation in der gemischten Feststoffsuspension behindern kann, falls die Polymermoleküle die Gelegenheit bekommen, das kristalline Natriumoxalat zu "sehen".

Beispiel 8

Eine für den Wachstumsschritt der Ausrührung einer modernen Aluminiumoxidfabrik typische Bayer-Lauge (Zusammensetzung: Na$_2$O$_{frei}$~136 g/l; Al$_2$O$_3$~118 g/l) wurde auf eine Natriumoxalat-Konzentration von 3,2 g/l eingestellt und mit 200 g/l gewaschenem Al(OH)$_3$ geimpft, wobei letzteres eine für den Bayer-Prozeß typische Korngrößenverteilung aufwies. Ausrührtests wurden in der vorher beschriebenen Apparatur bei 60 °C und 24 Stunden Verweilzeit (mit einem Laugenvolumen von 500 ml in jedem Gefäß) durchgeführt in Abhängigkeit von Natriumpolyacrylat-Zugabe (15 und 30 mg/l, ausgedrückt als organischer Kohlenstoff). Folgende Ergebnisse wurden ermittelt:

| Zugabe von Na-Polyacrylat mg/l | Lauge Al$_2$O$_3$-Konz. g/l | Lauge Na-Oxalat-Konz. g/l | Korngrößen-Analyse | | |
|---|---|---|---|---|---|
| | | | Gew.%> >90$\mu$m | Gew.%< <45$\mu$m | Anzahl Teilchen per g 10$^6$ |
| 0 | 97,1 | 3,2 | 43,4 | 14,4 | 3,10 |
| 15 | 96,6 | 3,3 | 45,0 | 15,8 | 3,01 |
| 30 | 96,6 | 3,2 | 44,0 | 16,7 | 3,22 |
| Impfer-Al(OH)$_3$ | - | - | 46,7 | 15,6 | 3,91 |

Die Ergebnisse zeigen, daß die Zugabe kleiner Mengen von Natriumpolyacrylat unter den Bedingungen des "Wachstums"-Ausrührens keinen signifikanten Einfluß auf die Laugenproduktivität oder Partikelgröße des Produktions-Aluminiumhydroxids ausübt.

Somit zeigen die Proben - unter der Voraussetzung der Natriumoxalatfreiheit des Aluminiumhydroxids aus der Ausrührung - daß die Dünnlauge oder "die Fast-Dünnlauge" der Ausrührung bezüglich des Natriumoxalats stabil ist bei Konzentrationen, welche hoch genug sind, um eine ökonomische Natriumoxalatentfernung durch Kristallisation aus dem Nebenstrom zu ermöglichen.

Die inhibitive Einwirkung des Natriumpolyacrylats auf die homogene Keimbildung des Natriumoxalats und die Kristallisation der Natriumoxalat-Impfkristalle in alkalischer Aluminatlauge wurde bereits festgestellt (s. Lever, Travaux du Comité International pour l'étude des bauxites de l'alumine et de l'Aluminium, Bd. 13, Nr. 18 (1983), S. 335-344). Es ist auch bekannt, daß Natriumpolyacrylat bei niedriger Dosierung wirksam ist (die Konzentration, bei der die maximale Wirkung eintritt, ist 60 mg/l, ausgedrückt als organischer Kohlenstoff), und zwar innerhalb eines breiten Bereichs von Molgewichten.

Jedoch zeigt die vorliegende Erfindung überraschenderweise, daß Zugaben von Natriumoxalat bis zu 30 mg/l unwirksam sind als Inhibitoren der Natriumoxalat-Kristallisation, wenn eine relativ kleine Menge von kristallinem Natriumoxalat in Vermischung mit einer relativ großen Menge des kristallinem Al(OH)$_3$ anwesend ist.

Im Vergleich zu dem Impferwaschverfahren und der Kristallisation im Nebenstrom aus einer teileingedampften Lauge zeigt das erfindungsgemäße Verfahren überlegene Eigenschaften, da (a) keine Laugeeindampfung erforderlich ist, (b) die Ausrührung des Bayer-Prozesses vollkommen frei ist von der Verunreinigung durch kristallines Natriumoxalat und (c) die Aluminiumhydroxid-Ausrührung in dem "oxalatfreien" Zustand durch Zugabe von kleinen Mengen eines organischen Polymeren wie Natriumpolyacrylat stabilisiert werden kann.

## Ansprüche

1. Verfahren zur Entfernung von Natriumoxalat aus einer alkalischen Bayer-Aluminatlauge, die durch den Aufschluß von Bauxit nach dem Bayer-Verfahren erhalten wird, wobei die alkalische Aluminatlauge in eine Aluminiumhydroxid-Ausrührung eingeleitet wird und nach Abtrennung des Aluminiumhydroxids und gegebenenfalls einer Menge von Natriumoxalat eine Dünnlauge in den Bauxitaufschluß zurückgeführt wird, dadurch gekennzeichnet, daß die Abtrennung des Natriumoxalats aus folgenden Schritten besteht:

a) Auswaschen des aus der Ausrührung abgetrennten Aluminiumhydroxids, bis es praktisch frei von kristallinem Oxalat wird;

b) Zugabe eines Anteils des gewaschenen Aluminiumhydroxids als Impfer in die Ausrührung, wobei der Impfer frei von Natriumoxalat ist und die Natriumoxalat-Kristallisation innerhalb der 42 h Ausrührung vermieden wird; Erhöhung der Konzentration des gelösten Natriumoxalats in der Dünnlauge auf einen Wert, bei dem die Natriumoxalat-Löslichkeit ≥ 2 g/l überschritten wird;

c) Entnahme eines Nebenstroms aus der Dünnlauge nach der Aluminiumhydroxid-Ausrührung und vor dem Bauxitaufschluß;

d) Zugabe von Natriumoxalat-Kristallen als Impfer zu diesem Nebenstrom, wodurch das Natriumoxalat in einer Menge auskristallisiert, die mindestens gleich ist der Menge, die in dem Bayer-Prozess aus den organischen Substanzen während des Bauxitaufschlusses entsteht;

e) Abtrennung des kristallinen Natriumoxalats und

f) Zusammenführung dieser an Oxalat angereicherten Lauge mit der Dünnlauge (zur Regulierung) in den Bauxitaufschluß.

2. Verfahren nach Anspruch 1, gekennzeichnet durch die Zugabe eines organischen Polymeren am Ende der Aluminiumhydroxid-Ausrührung und vor der Entfernung des ausgerührten Aluminiumhydroxids, um die Lauge gegen die Natriumoxalat-Kristallisation zu stabilisieren.

3. Verfahren nach einem der vorhergehenden Ansprüche, dadurch gekennzeichnet, daß das entfernte Aluminiumhydroxid aus der Ausrührung bis zu einem Natriumoxalat-Restgehalt ≤ 0,05 % gewaschen wird.

4. Verfahren nach einem der vorhergehenden Ansprüche, dadurch gekennzeichnet, daß in Abwesenheit von kristallinem Natriumoxalat in der Aluminiumhydroxid-Ausrührung die Konzentration des gelösten Natriumoxalats in der Dünnlauge erhöht wird.

5. Verfahren nach einem der vorhergehenden Ansprüche, dadurch gekennzeichnet, daß die Menge der bei der Kristallisation im Nebenstrom anwesenden Impfkristalle des Natriumoxalats mindestens das Zehnfache des neu kristallisierten Natriumoxalats beträgt.

6. Verfahren nach einem der vorhergehenden Ansprüche, dadurch gekennzeichnet, daß eine Kristallisation im Nebenstrom für etwa 30 Minuten bis 20 Stunden bei einer Temperatur von etwa 50 °C bis 65 °C durchgeführt wird.

7. Verfahren nach einem der vorhergehenden Ansprüche, dadurch gekennzeichnet, daß ein organisches Polymere in einer Menge zugegeben wird, die ausreicht, um die stimmulierte Keimbildung des Natriumoxalats durch gewaschenes Aluminiumhydroxid aus der Ausrührung zu verhindern.

8. Verfahren nach einem der vorhergehenden Ansprüche, dadurch gekennzeichnet, daß das organische Polymere Natriumpolyacrylat ist, welches in einer Menge von bis zu etwa 60 mg/l zugegeben wird.